Europäisches Patentamt

European Patent Office

Office européen des brevets

(19)

(11) **EP 1 418 544 A1**

(12) **EUROPEAN PATENT APPLICATION**

(43) Date of publication:
**12.05.2004 Bulletin 2004/20**

(51) Int Cl.$^7$: **G06T 5/50**

(21) Application number: **03077029.1**

(22) Date of filing: **30.06.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **11.07.2002 US 193342**

(71) Applicant: **EASTMAN KODAK COMPANY
Rochester, New York 14650 (US)**

(72) Inventors:
• **Chen, Shoupu Eastman Kodak Company
Rochester, New York 14650-2201 (US)**

• **Revelli, Joseph F. Eastman Kodak Company
Rochester, New York 14650-2201 (US)**
• **Cahill, Nathan D. Eastman Kodak Company
Rochester, New York 14650-2201 (US)**
• **Ray, Lawrence A. Eastman Kodak Company
Rochester, New York 14650-2201 (US)**

(74) Representative: **Haile, Helen Cynthia et al
Kodak Limited
Patent, W92-3A,
Headstone Drive
Harrow, Middlesex HA1 4TY (GB)**

(54) **Method and apparatus for generating images used in extended range image composition**

(57)    In a method of obtaining an extended dynamic range image of a scene from a plurality of limited dynamic range images captured by an image sensor in a digital camera, a plurality of digital images comprising image pixels of the scene are captured by exposing the image sensor to light transmitted from the scene, wherein light transmittance upon the image sensor is adjustable. Each image is evaluated after it is captured for an illumination level exceeding the limited dynamic range of the image for at least some of the image pixels. Based on the evaluation of each image exceeding the limited dynamic range, the light transmittance upon the image sensor is adjusted in order to obtain a subsequent digital image having a different scene brightness range. The plurality of digital images are stored, and subsequently the stored digital images are processed to generate a composite image having an extended dynamic range greater than any of the digital images by themselves. In addition, light attenuation data may be stored with the images for subsequent reconstruction of higher bit-depth images than the original images.

FIG. 5

EP 1 418 544 A1

**Description**

The present invention relates to the field of digital image processing and, in particular, to capturing and digitally processing a high dynamic range image.

A conventional digital camera captures and stores an image frame represented by 8 bits of brightness information, which is far from adequate to represent the entire range of luminance levels, particularly since the brightness variation within a real-world scene corresponding to the captured single frame is usually much larger. This discrepancy causes distortions in parts of the image, where the image is either too dark or too bright, resulting in a loss of detail. The dynamic range of a camera is defined as the range of brightness levels that can be produced by the camera without distortions.

There exist various methods in the art to expand the dynamic range of a camera. For example, camera exposure mechanisms have traditionally attempted to adjust the lens aperture and/or shutter speed to maximize the overall detail that will be faithfully recorded. Photographers frequently expose the same scene at a variety of exposure settings (known as bracketing), later selecting the one exposure that they most prefer and discarding the rest. In U.S. Patent No. 5,828,793, which is entitled "Method and Apparatus for Producing Digital Images Having Extended Dynamic Ranges" and issued Oct. 27, 1998 to Steve Mann, an automatic method optimally combines images captured with different exposure settings to form a final image having expanded dynamic range yet still exhibiting subtle differences in exposure. Although adjusting the lens aperture changes the amount of the subject illumination transmitted to the image sensing array, it also has the unfortunate side effect of affecting image resolution.

Another well known way to regulate exposures is by use of timing control. In a typical digital camera design, timing circuitry supplies timing pulses to the camera. The timing pulses supplied to the camera can actuate the photoelectric accumulation of charge in the sensor arrays for varying periods of selectable duration and govern the readout of the signal currents. For a digital camera with one or more CCD arrays, it is known that there is a loss of information because of the CTE (charge transfer efficiency) of the array (see CCD Arrays, Cameras and Displays, by Gerald C. Holst, SPIE Optical Engineering Press, 1998). Because of the time it takes for the electrons to move from one storage site to the next, there is a tradeoff between frame rate (dictated by clock frequency) and image quality (affected by CTE).

There are other approaches to regulating exposures. For example, in U.S. Pat. No. 4,546,248, entitled "Wide Dynamic Range Video Camera" and issued October 8, 1985 in the name of Glenn D. Craig, a liquid crystal light valve is used to attenuate light from bright objects that are sensed by an image sensor in order to fit within the dynamic range of the system, while dim objects are not. In that design, a television camera apparatus receives linearly polarized light from an object scene, the light being passed by a beam splitter and focused on the output plane of a liquid crystal light valve. The light valve is oriented such that, with no excitation from a cathode ray tube that receives image signals from the image sensor, all light phase is rotated 90 degrees and focused on the input plane of the image sensor. The light is then converted to an electrical signal, which is amplified and used to excite the cathode ray tube. The resulting image is collected and focused by a lens onto the light valve, which rotates the polarization vector of the light to an extent proportional to the light intensity from the cathode ray tube. This is a good example of using a liquid crystal light valve in an attempt to capture the bright object light within the bit-depth (dynamic range) of the camera sensor.

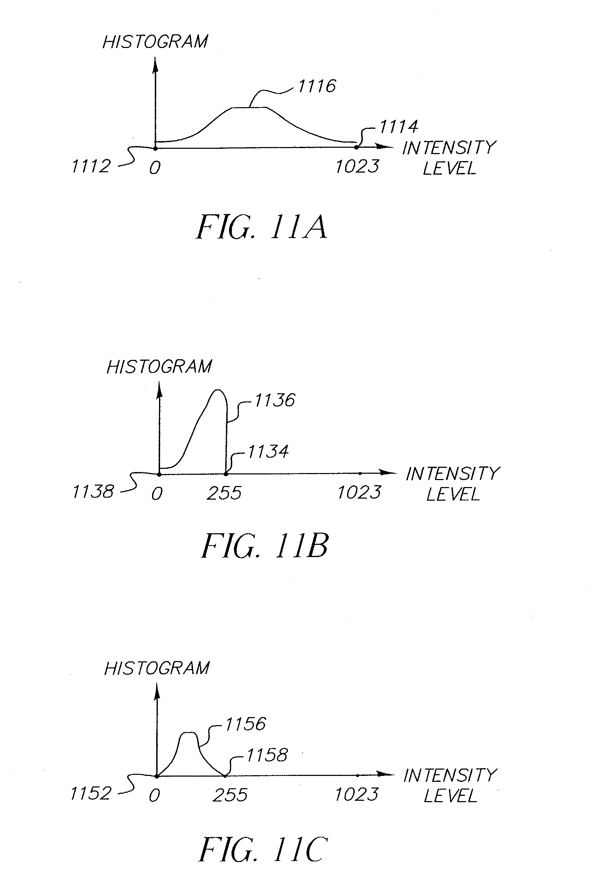

However, the design disclosed in U.S. Patent No. 4,546,248 may produce less than satisfying results if the scene contains objects of different brightness. For example, Fig. 11 (A) shows a histogram **1116** of intensity levels of a scene in which the intensity levels range from 0 (**1112**) to 1023 (**1114**). This histogram represents a relatively high dynamic range (10-bits) scene. For this scene, the method described in U.S. Pat. No. 4,546,248 may produce an image whose intensity histogram **1136** is distorted from that of original scene **1116**, as shown in Fig. 11 (B). In this example, the range in Fig. 11(B) is from 0 (**1138**) to 255 (**1134**). Also, the optical and mechanical structure of the design described in the '248 patent may not fit on a consumer camera.

A common feature of the existing high dynamic range techniques is the capture of multiple images of a scene, each with different optical properties (different brightnesses). These multiple images represent different portions of the illumination range in the scene. A composite image can be generated from these multiple images, and this composite image covers a larger brightness range than any individual image does. To obtain multiple images, special cameras have been designed, which use a single lens but multiple sensors such that the same scene is simultaneously imaged on different sensors, subject to different exposure settings. The basic idea in multiple sensor-based high dynamic range cameras is to split the light refracted from the lens into multiple beams, each of which is then allowed to converge on a sensor. The splitting of the light can be achieved by beam-splitting devices such as semi-transparent mirrors or special prisms. There are drawbacks associated with such a design. First, the splitters introduce additional lens aberrations because of their finite thickness. Second, most of the splitters split light into two beams. For generating more beams, multiple splitters have to be used. However, the short optical path between the lens and sensors constrains the number of splitters that can be placed in the optical path.

Manoj Aggarwal and Narendra Ahuja (in "Split Aperture Imaging for High Dynamic Range", *Proceedings of ICCV 2001*, 2001) proposed a method that uses multiple sensors that partition the cross-section of the incoming beam into as many parts as desired. That is done by splitting the aperture into multiple parts and directing the light exiting from each part in a different direction using an assembly of mirrors. Their method avoids both of the above drawbacks which are encountered when using traditional beam splitters. However, there is a common drawback in the multi-sensor methods: that is, the possibility of misalignment and geometric distortion of the images generated by the multiple sensors. Moreover, this kind of design requires a special sensor structure, optical path, and mechanical fixtures. Therefore, a single sensor method capable of producing multiple images is more desirable.

It is understood that existing high dynamic range techniques simply compress received intensity signal levels in order to make the resultant signal levels compatible with low bit-depth capture devices (e.g., standard consumer digital cameras have a bit-depth of 8 bits/pixel, which is considered low bit-depth in this context, because it does not cover an adequate range of exposure levels). Unfortunately, once the information is discarded it is impossible to re-generate high bit-depth (e.g. 12 bits/pixel) images that better represent the original scene in situations where high bit-depth output devices are available. There have been methods (see, e.g., commonly-assigned U.S. Patent Nos. 6,282,313 B1 and US 6,335,983 B1 both issued in the name of McCarthy et al) that convert a high bit-depth image (e. g. a 12 bits/pixel image) to a low bit-depth image (e.g. an 8 bits/pixel image). In these methods, a set of residual images is saved in addition to the low bit-depth images. The residual images can be used to reconstruct high bit-depth images later when there is a need. However, these methods teach how to recover high bit-depth images from the process of representing these images as low bit-depth images. Unfortunately, these methods do not apply to cases where high bit-depth images are not available in the first place.

It would be desirable to be able to convert a conventional low-bit depth electronic camera (e.g., having a CCD sensor device) to a high dynamic range imaging device without changing camera optimal charge transfer efficiency (CTE), or using multiple sensors and mirrors, or affecting the image resolution.

The present invention is directed to overcoming one or more of the problems set forth above. Briefly summarized, the invention resides in a method of obtaining an extended dynamic range image of a scene from a plurality of limited dynamic range images captured by an image sensor in a digital camera. The method includes the steps of: (a) capturing a plurality of digital images comprising image pixels of the scene by exposing the image sensor to light transmitted from the scene, wherein light transmittance upon the image sensor is adjustable; (b) evaluating each image after it is captured for an illumination level exceeding the limited dynamic range of the image for at least some of the image pixels; (c) based on the evaluation of each image exceeding the limited dynamic range, adjusting the light transmittance upon the image sensor in order to obtain a subsequent digital image having a different scene brightness range; (d) storing the plurality of digital images; and (e) processing the stored digital images to generate a composite image having an extended dynamic range greater than any of the digital images by themselves.

According to another aspect of the invention, a high bit depth image of a scene is obtained from images of lower bit depth of the scene captured by an image sensor in a digital camera, where the lower bit depth images also comprise lower dynamic range images. This method includes the steps of: (a) capturing a plurality of digital images of lower bit depth comprising image pixels of the scene by exposing the image sensor to light transmitted from the scene, wherein light transmittance upon the image sensor is variably attenuated for at least one of the images; (b) evaluating each image after it is captured for an illumination level exceeding the limited dynamic range of the image for at least some of the image pixels; (c) based on the evaluation of each image exceeding the limited dynamic range, adjusting the light transmittance upon the image sensor in order to obtain a subsequent digital image having a different scene brightness range; (d) calculating an attenuation coefficient for each of the images corresponding to the degree of attenuation for each image; (e) storing data for the reconstruction of one or more high bit depth images from the low bit depth images, said data including the plurality of digital images and the attenuation coefficients; and (f) processing the stored data to generate a composite image having a higher bit depth than any of the digital images by themselves.

The advantage of this invention is the ability to convert a conventional low-bit depth electronic camera (e.g., having an electronic sensor device) to a high dynamic range imaging device without changing camera optimal charge transfer efficiency (CTE), or having to use multiple sensors and mirrors, or affecting the image resolution. Furthermore, by varying the light transmittance upon the image sensor for a group of images in order to obtain a series of different scene brightness ranges, an attenuation factor may be calculated for the images. The attenuation factor represents additional image information that can be used together with image data (low bit-depth data) to further characterize the bit-depth of the images, thereby enabling the generation of high-bit depth images from a low bit-depth device.

These and other aspects, objects, features and advantages of the present invention will be more clearly understood and appreciated from a review of the following detailed description of the preferred embodiments and appended claims, and by reference to the accompanying drawings.

FIG. 1A is a perspective view of a first embodiment of a camera for generating images used in high dynamic range image composition according to the invention.
FIG. 1B is a perspective view of a second embodiment of a camera for generating images used in high dynamic range image composition according to the invention.

FIG. 2 is a perspective view taken of the rear of the cameras shown in Figures 1A and 1B.

FIG. 3 is a block diagram of the relevant components of the cameras shown in Figures 1A and 1B.

FIG. 4 is a diagram of the components of a liquid crystal variable attenuator used in the cameras shown in Figures 1A and 1B.

FIG. 5 is a flow diagram of a presently preferred embodiment for extended range composition according to the present invention.

FIG. 6 is a flow diagram of a presently preferred embodiment of the image alignment step shown in Figure 5 for correcting unwanted motion in the captured images.

FIG. 7 is a flow diagram a presently preferred embodiment of the automatic adjustment step shown in Figure 5 for controlling light attenuation.

FIG. 8 is a diagrammatic illustration of an image processing system for performing the alignment correction shown in Figures 5 and 6.

FIG. 9 is a pictorial illustration of collected images with different illumination levels and a composite image.

FIG. 10 is a flow chart of a presently preferred embodiment for producing recoverable information in order to generate a high bit-depth image from a low bit-depth capture device.

FIGS. 11(A), 11(B) and 11(C) are histograms showing different intensity distributions for original scene data, and for the scene data as captured and processed according to the prior art and according to the invention.

Because imaging devices employing electronic sensors are well known, the present description will be directed in particular to elements forming part of, or cooperating more directly with, apparatus in accordance with the present invention. Elements not specifically shown or described herein may be selected from those known in the art. Certain aspects of the embodiments to be described may be provided in software. Given the system as shown and described according to the invention in the following materials, software not specifically shown, described or suggested herein that is useful for implementation of the invention is conventional and within the ordinary skill in such arts.

The present invention describes method and apparatus for converting a conventional low-bit depth electronic camera (e.g., having a CCD sensor device) to a high dynamic range imaging device, without changing camera optimal charge transfer efficiency (CTE), by attaching a device known as a variable attenuator and limited additional electronic circuitry to the camera system, and by applying digital image processing methods to the acquired images. Optical devices that vary light transmittance are commercially available. Meadowlark Optics manufactures an assortment of these devices known as Liquid Crystal Variable Attenuators. The liquid crystal variable attenuator offers real-time continuous control of light intensity. Light transmission is maximized by applying the correct voltage to achieve half-wave retardance from the liquid crystal. Transmission decreases as the applied voltage amplitude increases.

Any type of single sensor method of capturing a collection of images that are used to form a high dynamic range image necessarily suffers from unwanted motion in the camera or scene during the time that the collection of images is captured. Therefore, the present invention furthermore describes a method of generating a high dynamic range image by capturing a collection of images using a single CCD sensor camera with an attached Liquid crystal variable attenuator, wherein subsequent processing according to the method corrects for unwanted motion in the collection of images.

In addition, the present invention teaches a method that uses a low bit-depth device to generate high dynamic range images (low bit-depth images), and at the same time, produces recoverable information to be used to generate high bit-depth images.

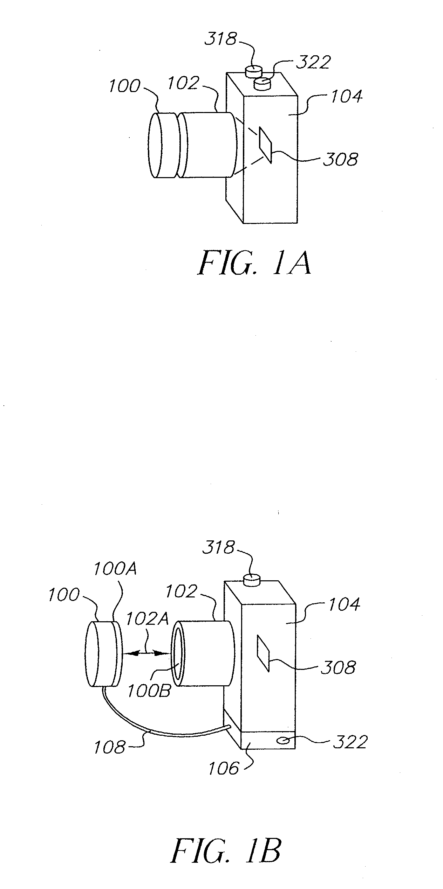

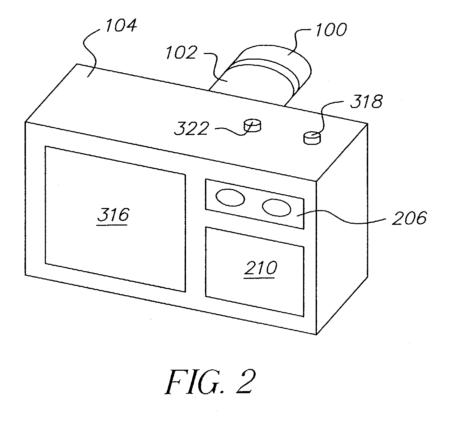

FIGS. 1A, 1B and 2 show several related perspective views of camera systems useful for generating images used in high dynamic range image composition according to the invention. Each of these figures illustrate a camera body **104**, a lens **102**, a liquid crystal variable attenuator **100**, an image capture switch **318** and a manual controller **322** for the attenuator voltage. The lens **102** focuses an image upon an image sensor **308** inside the camera body **104** (e.g., a charge coupled device (CCD) sensor), and the captured image is displayed on a light emitting diode (LED) display **316** as shown in Figure 2. A menu screen **210** and a menu selector **206** are provided for selecting camera operation modes.

The second embodiment for a camera as shown in Figure 1B illustrates the variable attenuator **100** as an attachment placed in an optical path **102A** of the camera. To enable attachment, the variable attenuator **100** includes a threaded section **100A** that is conformed to engage a corresponding threaded section on the inside **102B** of the lens barrel of the lens **102**. Other forms of attachment, such as a bayonet attachment, may be used. The objective of an attachment is to enable use of the variable attenuator with a conventional camera; however, a conventional camera will not include any voltage control circuitry for the variable attenuator. Consequently, in this second embodiment, the manual controller **322** is located on a power atttachment **106** that is attached to the camera, e.g., by attaching to a connection on the bottom plate of the camera body **104**. The variable attenuator **100** and the power attachment **106** are connected by a cable **108** for transmitting power and control signals therebetween. (The cable **108** would typically be coupled, at least on the attenuator end of the connection, to a cable jack (not shown) so that the attenuator **100** could be screwed into the lens **102** and then connected to the cable **108**.)

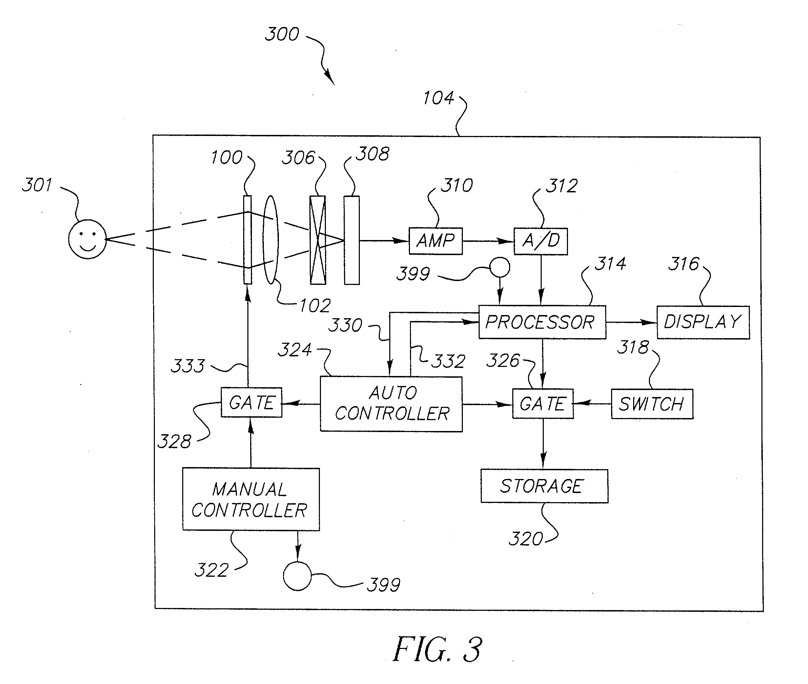

Referring to the block diagram of Figure 3, a camera system used for generating images for high dynamic range composition is generally designated by a reference character **300**. The camera system **300** includes the body **104**, which provides the case and chassis to which all elements of the camera system **300** are firmly attached. Light from an object **301** enters the liquid crystal variable attenuator **100**, and the light exiting the attenuator **100** is then collected and focused by the lens **102** through an aperture **306** upon the CCD sensor **308**. In the CCD sensor **308**, the light is converted into an electrical signal and applied to an amplifier **310**. The amplified electrical signal from the amplifier **310** is digitized by an analog to digital converter **312**. The digitized signal is then processed in a digital processor **314** so that it is ready for display or storing.

The signal from the digital processor **314** is then utilized to excite the LED display **316** and produce an image on its face which is a duplicate of the image formed at the input face of the CCD sensor **308**. Typically, a brighter object in a scene causes a corresponding portion of the CCD sensor **308** to become saturated, thereby producing a white region without any, or at least very few, texture details in the image shown on the display face of the LED display **316**. The brightness information from at least the saturated portion is translated by the processor **314** into a voltage change **333** that is processed by an auto controller **324** and applied through a gate **328** to the liquid crystal variable attenuator **100**. Alternatively, the manual controller **322** may produce a voltage change that is applied through the gate **328** applied to the liquid crystal variable attenuator **100**.

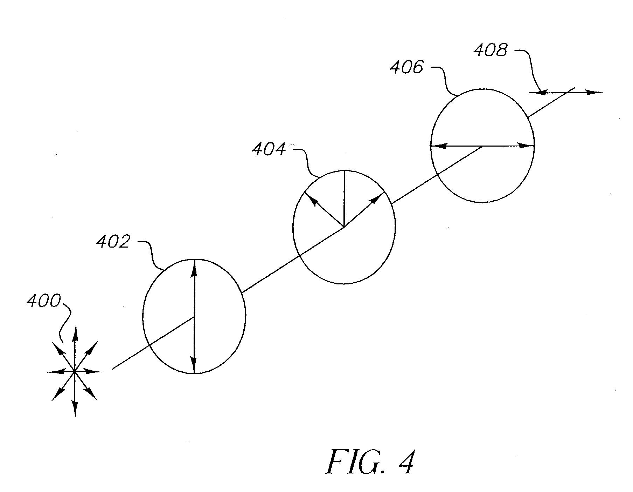

Referring to FIG. 4, the liquid crystal variable attenuator **100** comprises a liquid crystal variable retarder **404** operating between two crossed linear polarizers: an entrance polarizer **402** and an exit polarizer **406**. Such a liquid crystal variable attenuator is available from Meadowlark Optics, Frederick, Colorado. With crossed polarizers, light transmission is maximized by applying a correct voltage **333** to the retarder **404** to achieve half-wave retardance from its liquid crystal cell, as shown in FIG. 4. An incoming unpolarized input light beam **400** is polarized by the entrance polarizer **402**. Half-wave operation of the retarder **404** rotates the incoming polarization direction by 90 degrees, so that light is passed by the exit polarizer 406. Minimum transmission is obtained with the retarder **404** operating at zero waves.

Transmission decreases as the applied voltage **333** increases (from half to zero waves retardance). A relationship between transmittance T and retardance $\delta$ (in degrees) for a crossed polarizer configuration is given by

$$T(\delta) = \frac{1}{2}[1 - \cos(\delta)]\, T_{max} \qquad (1)$$

where $T_{max}$ is a maximum transmittance when retardance is exactly one-half wave (or 180 degrees). The retardance $\delta$ (in degrees) is a function of an applied voltage $V$ and could be written as $\delta = f(V)$, where function $f$ can be derived from the specifications of the attenuator **100** or determined through experimental calibrations. With this relationship, Equation (1) is re-written as

$$T(\delta) = \frac{1}{2}[1 - \cos(f(V))]\, T_{max} \qquad (2)$$

Next, define a transmittance attenuation coefficient $\Re = T(\delta)/T_{max}$. From Equation (2), it is known that the transmittance attenuation coefficient $\Re$ is a function of $v$ and can be expressed as

$$\Re(v) = \frac{1}{2}\left[1 - \cos(f(V))\right] \qquad \textbf{(3)}$$

The transmittance attenuation coefficient $\Re(V)$ defined here is to be used later in an embodiment describing how to recover useful information to generate high bit-depth images. The values of $\Re(V)$ can be pre-computed off-line and stored in a look up table (LUT) in the processor **314**, or computed in real time in the processor **314**.

Maximum transmission is dependent upon properties of the liquid crystal variable retarder **404** as well as the polarizers **402** and **406** used. With a system having a configuration as shown in FIG. 4, the unpolarized light source **400** exits at the exit polarizer **406** as a polarized light beam **408**. The camera system **300** is operated in different modes, as selected by the mode selector **206**. In a manual control mode, a voltage adjustment is sent to the gate **328** from the manual controller **322**, which is activated and controlled by a user if there is a saturated portion in the displayed image. Accordingly, the attenuator **100** produces a lower light transmittance, therefore, reducing the amount of saturation that the CCD sensor **308** can produce. An image can be captured and stored in a storage **320** through the gate **326** by closing the image capture switch **318**, which is activated by the user.

In a manual control mode, the user may take as many images as necessary for high dynamic range image composition, depending upon scene illumination levels. In other words, an arbitrary dynamic range resolution can be achieved. For example, a saturated region of an area $B_1$ can be shrunk to an area $B_2$, (where $B_2 < B_1$), by adjusting the controller **322** so that the transmittance $T_1(\delta)$ of the light attenuator **100** is set to an appropriate level. A corresponding image $I_1$ is stored for that level of attenuation. Likewise, the controller **322** can be adjusted a second time so that the transmittance $T_2(\delta)$ of the light attenuator **100** causes the spot $B_2$ in the display **316** to shrink to $B_3$, (where $B_3 < B_2$). A corresponding image $I_2$ is stored for that level of luminance. This process can be repeated for N attenuation levels.

In an automatic control mode, when the processor **314** detects saturation and provides a signal on the line **330** to an auto controller **324**, the controller **324** generates a voltage adjustment that is sent to the gate **328**. Accordingly, the attenuator **100** produces a lower light transmittance, thereby reducing the amount of saturation that the CCD sensor **308** can produce. An image can be stored in the storage **320** through the gate **326** upon a signal from the auto controller **324**. The detection of saturation by the digital processor **314** and the auto controlling process performed by the auto controller **324** are explained below.

In the auto mode, the processor **314** checks an image to determine if and how many pixels have an intensity level exceeding a pre-programmed threshold $T_V$. An exemplary value $T_V$ is 254.0. If there are pixels whose intensity levels exceed $T_V$, and if the ratio, $R$, is greater than a pre-programmed threshold $T_N$, where $R$ is the ratio of the number of pixels whose intensity levels exceed $T_V$ to the total number of pixels of the image, then the processor **314** generates a non-zero value signal that is applied to the auto controller **324** through line **330**. Otherwise, the processor **314** generates a zero value that is applied to the auto controller **324**. An exemplary value for the threshold $T_N$ is 0.01. Upon receiving a non-zero signal, the auto controller **324** increases an adjustment voltage $V$ by an amount of $\delta_V$. The initial value for the adjustment voltage $V$ is $V_{min}$. The maximum allowable value of $V$ is $V_{max}$. The value of $\delta_V$ can be easily determined based on how many attenuation levels are desired and the specification of the attenuator. An exemplary value of $\delta_V$ is 0.5 volts. Both $V_{min}$ and $V_{max}$ are values that are determined by the specifications of the attenuator. An exemplary value of $V_{min}$ is 2 volts and an exemplary value of $V_{max}$ is 7 volts.

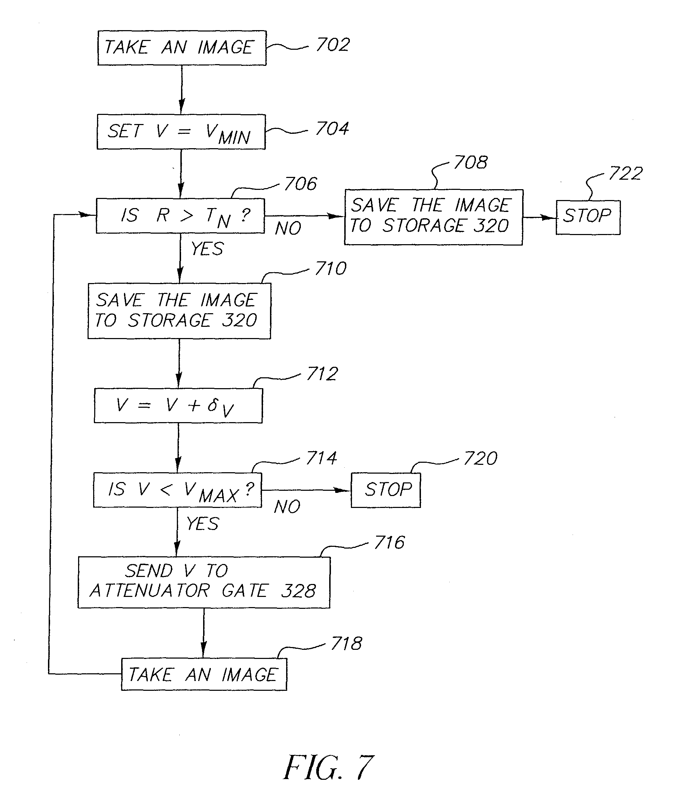

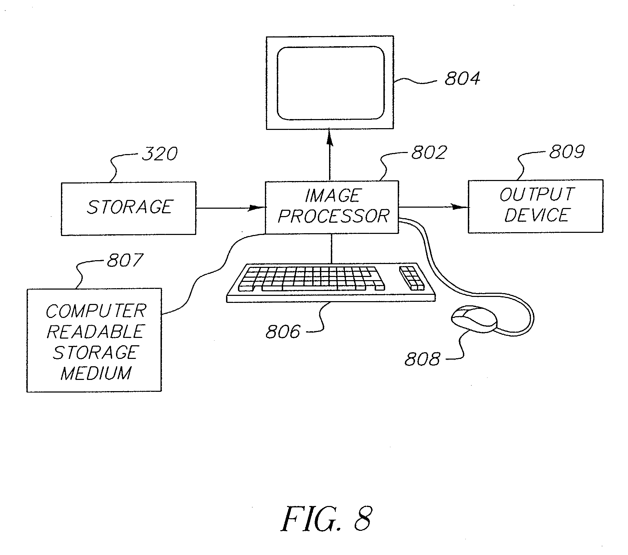

Figure 7 shows the process flow for an automatic control mode of operation. In the initial state, the camera captures an image (step **702**), and sets the adjustment voltage $V$ to $V_{min}$ (step **704**). In step **706**, the processor **314** checks the intensity of the image pixels to determine if there is a saturation region (where pixel intensity levels exceed $T_V$) in the image and checks the ratio $R$ to determine if $R > T_N$, where $R$ is the aforementioned ratio of the number of pixels whose intensity levels exceed $T_V$ to the total number of pixels of the image. If the answer is 'No', the processor **314** saves the image to storage **320** and the process stops at step **722**. If the answer is 'Yes', the processor **314** saves the image to storage **320** and increases the adjustment voltage $V$ by an amount of $\delta_V$ (step **712**). In step **714**, the processor **314** checks the feedback **332** from the auto controller **324** to see if the adjustment voltage $V$ is less than $V_{max}$. If the answer is 'Yes', the processor **314** commands the auto controller **324** to send the adjustment voltage $V$ to the gate **328**. Another image is then captured and the process repeats. If the answer from step **714** is 'No', then the process stops. Images collected in the storage **320** in the camera **300** are further processed for alignment and composition in an image processing system as shown in Figure 8.

Referring to Figure 8, the digital images from the digital image storage **320** are provided to an image processor **802**, such as a programmable personal computer, or a digital image processing work station such as a Sun Sparc workstation. The image processor **802** may be connected to a CRT display **804**, an operator interface such as a keyboard **806** and a mouse **808**. The image processor **802** is also connected to a computer readable storage medium **807**. The image processor **802** transmits processed digital images to an output device **809**. The output device **809** can comprise a hard copy printer, a long-term image storage device, a connection to another processor, or an image telecommunication device connected, for example, to the Internet. The image processor **802** contains software for implementing the process of image alignment and composition, which is explained next.

As previously mentioned, the preferred system for capturing multiple images to form a high dynamic range image does not capture all images simultaneously, so any unwanted motion in the camera or scene during the capture process will cause misalignment of the images. Correct formation of a high dynamic range image assumes the camera is stable, or not moving, and that there is no scene motion during the capture of the collection of images. If the camera is mounted on a tripod or a monopod, or placed on top of or in contact with a stationary object, then the stability assumption is likely to hold. However, if the collection of images is captured while the camera is held in the hands of the photographer, the slightest jitter or movement of the hands may introduce stabilization errors that will adversely affect the formation of the high dynamic range image.

The process of removing any unwanted motion from a sequence of images is called image stabilization. Some systems use optical, mechanical, or other physical means to correct for the unwanted motion at the time of capture or scanning. However, these systems are often complex and expensive. To provide stabilization for a generic digital image sequence, several digital image processing methods have been developed and described in the prior art.

A number of digital image processing methods use a specific camera motion model to estimate one or more parameters such as zoom, translation, rotation, etc. between successive frames in the sequences. These parameters are computed from a motion vector field that describes the correspondence between image points in two successive frames. The resulting parameters can then be filtered over a number of frames to provide smooth motion. An example of such a system is described in U.S. Patent No. 5,629,988, entitled "System and Method for Electronic Image Stabilization" and issued May 13, 1997 in the names of Burt et al, and which is incorporated herein by reference. A fundamental assumption in these systems is that a global transformation dominates the motion between adjacent frames. In the presence of significant local motion, such as multiple objects moving with independent motion trajectories, these methods may fail due to the computation of erroneous global motion parameters. In addition, it may be difficult to apply these methods to a collection of images captured with varying exposures because the images will differ dramatically in overall intensity. Only the information contained in the phase of the Fourier Transform of the image is similar.

Other digital image processing methods for removing unwanted motion make use of a technique known as phase correlation for precisely aligning successive frames. An example of such a method has been reported by Eroglu et al. (in "A fast algorithm for subpixel accuracy image stabilization for digital film and video," *Proc. SPIE Visual Communications and Image Processing,* Vol. 3309, pp. 786- 797, 1998). These methods would be more applicable to the stabilization of a collection of images used to form a high dynamic range image because the correlation procedure only compares the information contained in the phase of the Fourier Transform of the images.

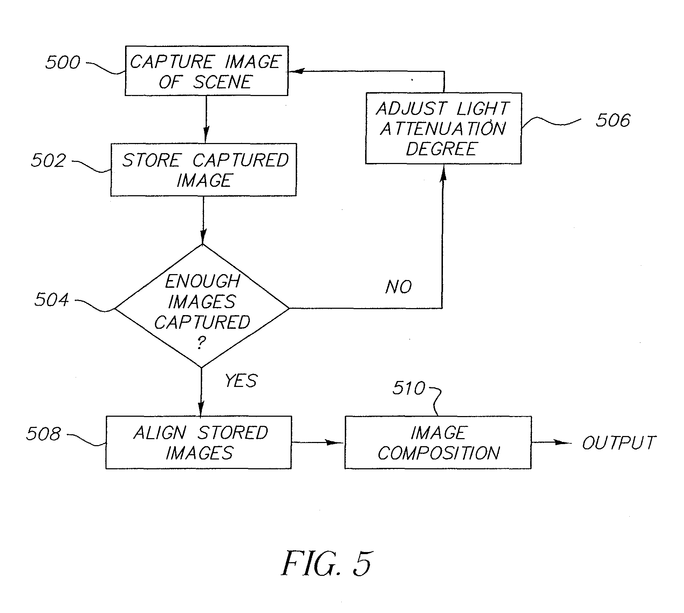

FIG. 5 shows a flow chart of a system that unifies the previously explained manual control mode and auto control mode, and which includes the process of image alignment and composition. This system is capable of capturing, storing, and aligning a collection of images, where each image corresponds to a distinct luminance level. In this system, the high dynamic range camera **300** is used to capture (step **500**) an image of the scene. This captured image corresponds to the first luminance level, and is stored (step **502**) in memory. A query **504** is made as to whether enough images have been captured to form the high dynamic range image. A negative response to query **504** indicates that the degree of light attenuation is changed (step **506**) e.g., by the auto controller **324** or by user adjustment of the manual controller **322**. The process of capturing (step **500**) and storing (step **502**) images corresponding to different luminance levels is repeated until there is an affirmative response to query **504**. An affirmative response to query **504** indicates that all images have been captured and stored, and the system proceeds to the step **508** of aligning the stored images. It should be understood that in the manual control mode, steps **504** and **506** represent actions including manual voltage adjustment and the user's visual inspection of the result. In the auto control mode, steps **504** and **506** represent actions including automatic image saturation testing, automatic voltage adjustment, automatic voltage limit testing, *etc.,* as stated in previous sections. Also, step **502** stores images in the storage **320**.

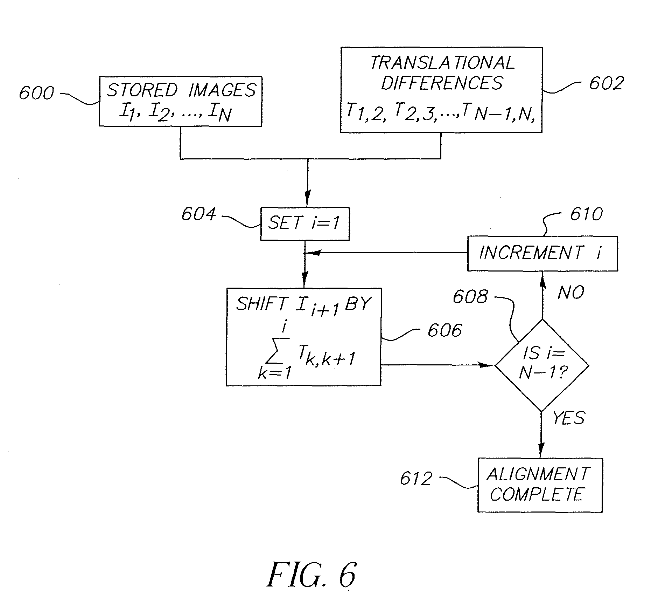

Referring now to Figure 6, an embodiment of the step **508** of aligning the stored images is described. During the step **508** of aligning the stored images **600**, the translational difference $\mathbf{T}_{j,j+1}$ (a two element vector corresponding to horizontal and vertical translation) between $I_j$ and $I_{j+1}$ is computed by phase correlation **602** (as described in the aforementioned Eroglu reference, or in C. Kuglin and D. Hines, "The Phase Correlation Image Alignment Method", *Proc. 1975 International Conference on Cybernetics and Society,* pp. 163-165, 1975.) for each integral value of j for 1 ≤ *j* ≤ *N*-1, where *N* is the total number of stored images. The counter *i* is initialized (step **604**) to one, and image $I_{i+1}$ is shifted (step **606**), or translated by

$$-\sum_{k=1}^{i} \mathbf{T}_{k,k+1} \; .$$

This shift corrects for the unwanted motion in image $I_{i+1}$ found by the translational model. A query **608** is made as to whether *i* = *N*-1. A negative response to query **608** indicates that *i* is incremented (step **610**) by one, and the process continues at step **606**. An affirmative response to query **608** indicates that all images have been corrected (step **612**) for unwanted motion, which completes step **506**.

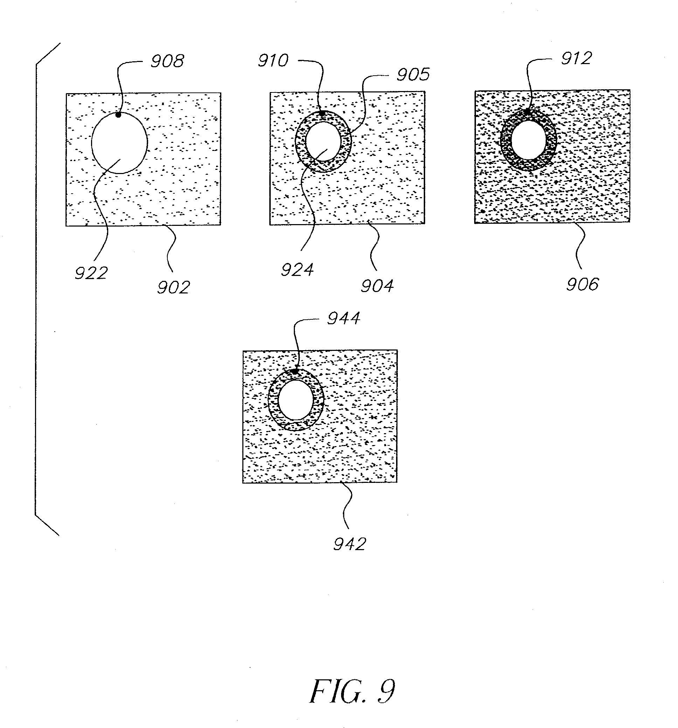

Figure 9 shows a first image **902** taken before manual or automatic light attenuation adjustment, a second image **904** taken after a first manual or automatic light attenuation adjustment, a third image **906** taken after a second manual or automatic light attenuation adjustment. It should be understood that Figure 9 only shows an exemplary set of images; the number of images (or adjustment steps) in a set could be, in theory, any positive integer. The first image **902** has a saturated region $B_1$ (**922**). The second image **904** has a saturated region $B_2$ (**924**), (where $B_2 < B_1$). The third image **906** has no saturated region. Figure 9 shows a pixel **908** in the image **902**, a pixel **910** in image **904**, and a pixel **912** in the image **906**. The pixels **908**, **910**, and **912** are aligned in the aforementioned image alignment step. Figure 9 shows that pixels **908**, **910**, and **912** reflect different illumination levels. The pixels **908**, **910**, and **912** are used in composition to produce a value for a composite image **942** at location **944**.

The process of producing a value for a pixel in a composite image can be formulated as a robust statistical estimation (Handbook for Digital Signal Processing by Mitra Kaiser, 1993). Denote a set of pixels (e.g. pixels **908**, **910**, and **912**) collected from *N* aligned images by $\{p_i\}$, $i \in [1, \Lambda \; N]$. Denote an estimation of a composite pixel in a composite image corresponding to set $\{p_i\}$ by $p_{est}$. The computation of $p_{est}$ is simply

$$p_{est} = median\{p_i\}, i \in [j_1, j_1 + 1\Lambda \, , \, N - j_2 - 1, N - j_2]$$

where $j_1 \in [0, \Lambda \, N], j_2 \in [0, \Lambda \, N]$, subject to $0 < j_1 + j_2 < N$. This formulation gives a robust estimation by excluding outliers (e.g. saturated pixels or dark pixels). This formulation also provides flexibility in selecting unsymmetrical exclusion boundaries, $j_1$ and $j_2$. Exemplary selections are $j_1 = 1$ and $j_2 = 1$.

The described robust estimation process is applied to every pixel in the collected images to complete the step **510** in Figure 5. For the example scene intensity distribution shown in Fig. 11 (A), a histogram of intensity levels of the composite image using the present invention is predicted to be like a curve **1156** shown in Fig. 11 (C) with a range of 0 (**1152**) to 255 (**1158**). Note that the intensity distribution 1156 has a shape similar to intensity distribution curve **1116** of the original scene (Fig. 11(A)). However, as can be seen, the intensity resolution has been reduced from 1024 levels to 256 levels. In contrast, however, without the dynamic range correction provided by the invention, the histogram of intensity levels would be as shown in Fig. 11(B), where considerable saturation is evident.

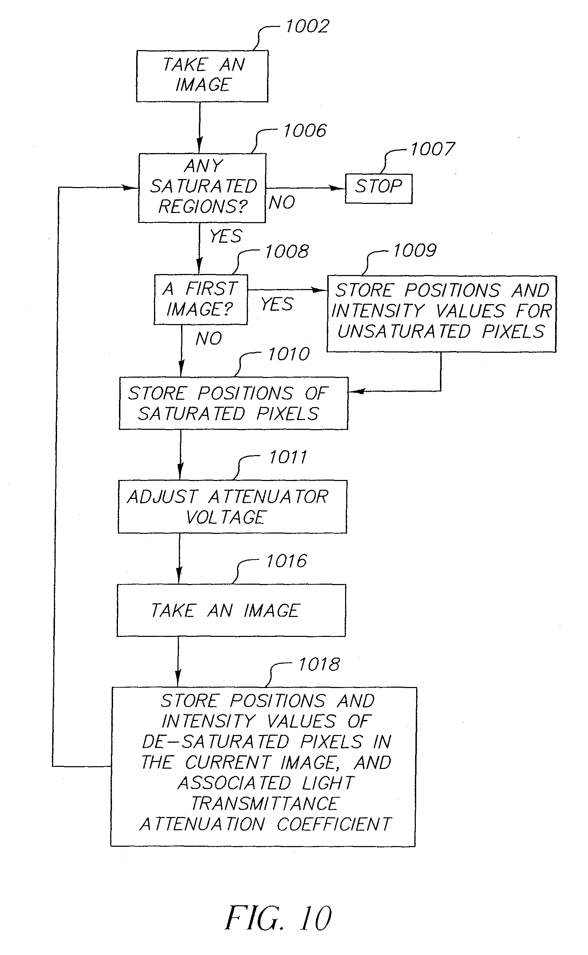

Fig. 10 shows a flow chart corresponding to a preferred embodiment of the present invention for producing recoverable information that is to be used to generate a high bit-depth image from a low bit-depth capture device. In its initial state, the camera captures a first image in step **1002**. In step **1006**, the processor **314** (automatic mode) or the user (manual mode) queries to see if there are saturated pixels in the image. If the answer is negative, the image is saved and the process terminates (step **1007**). If the answer is affirmative the process proceeds to step **1008**, which determines if the image is a first image. If the image is a first image, the processor **314** stores the positions and intensity values of the unsaturated pixels in a first file. If the image is other than a first image or after completion of step **1009**, the locations of the saturated pixels are temporarily stored (step **1010**) in a second file. The attenuator voltage is adjusted either automatically (by the auto controller **324** in Fig. 3) or manually (by the manual controller **322** in Fig. 3) as indicated in step **1011**. Adjustment and checking of voltage limits are carried out as previously described.

After the attenuator voltage is adjusted, the next image is captured, as indicated in step **1016**, and this new image becomes the current image. In step **1018**, the processor **314** stores positions and intensity levels in the first file of only those pixels whose intensity levels were saturated in the previous image but are unsaturated in the current image. The pixels are referred to as "de-saturated" pixels. The processor **314** also stores the value of the associated transmission attenuation coefficient $\Re(V)$ defined in Equation (3). Upon completion of step **1018**, the process loops back to step **1006** where the processor **314** (automatic mode) or user (manual mode) checks to see if there are any saturated pixels in the current image. The steps described above are then repeated.

The process is further explained using the example images in Fig. 9. In order to better understand the process, it is helpful to define several terms. Let $I_i$ denote a captured image, possibly having saturated pixels, where $i \in \{1, \Lambda, M\}$ and $M$ is the total number of captured images $M \geq 1$. All captured images are assumed to contain the same number of pixels N and each pixel in a particular image $I_i$ is identified by an index $n$, where $n \in \{1, \Lambda, N\}$. It is further assumed that all images are mutually aligned to one another so that a particular value of pixel index $n$ refers to a pixel location, which is independent of $I_i$. The Cartesian co-ordinates associated with pixel $n$ are denoted $(x_n, y_n)$ and the intensity level associated with this pixel in image $I_i$ is denoted $P_i(x_n, y_n)$. The term $S_i = \{n_{i1}, \Lambda, n_{ij}, \Lambda, n_{iN_i}\}$ refers to the subset of pixel indexes corresponding to saturated pixels in image $I_i$. The subscript $j \in \{1, \Lambda, N_i\}$ is associated with pixel index $n_{ij}$ in this subset where $N_i > 0$ is the total number of saturated pixels in image $I_i$. The last image $I_M$ is assumed to contain no saturated pixels. Accordingly, $S_M = NULL$ is an empty set for this image. Although the last assumption does not necessarily always hold true, it can usually be achieved in practice since the attenuator can be continuously tuned until the transmittance reaches a very low value. In any event, the assumption is not critical to the overall method as described herein.

Referring now to Fig. 9, the exemplary images having saturated regions are the first image **902**, denoted by $I_1$ and the second image **904**, denoted by $I_2$. An exemplary last image $I_3$ in Fig. 9 is the third image **906**. Exemplary saturated sets are the region **922**, denoted by $S_1$, and the region **924**, denoted by $S_2$. According to the assumption mentioned in the previous paragraph, $S_3 = NULL$.

After the adjustment of the attenuator control voltage $V$ and after capturing a new current image, image $I_{i+1}$ (i.e., steps **1011** and **1016**, respectively, in Fig. 10), the processor **314** retrieves the locations of saturated pixels in image $I_i$ that were temporarily stored in the second file. In step **1018** it checks to see if pixel $n_{ij}$ at location $(x_{nij}, y_{nij})$ has become de-saturated in the new current image. If de-saturation has occurred for this pixel, the new intensity level $P_{i+1}(x_{nij}, y_{nii})$ and the position $(x_{nij}, y_{nij})$ are stored in the first file along with the value of the associated attenuation coefficient, $\Re_{i+1}(V)$. The process of storing information on de-saturated pixels starts after a first adjustment of the attenuator control voltage and continues until a last adjustment is made.

Referring back to the example in Fig. 9 in connection with the process flow diagram shown in Figure 10, locations and intensities of unsaturated pixels of the first image **902** are stored in the first storage file (step **1009**). The locations of saturated pixels in the region **922** are stored temporarily in the second storage file (step **1010**). The second image **904** is captured (step **1016**) after a first adjustment of the attenuator control voltage (step **1011**). The processor **314** then retrieves from the second temporary storage file the locations of saturated pixels in the region **922** of the first image **902**. A determination is made automatically by the processor or manually by the operator to see if pixels at these locations have become de-saturated in the second image **904**. The first storage file is then updated with the positions and intensities of the newly de-saturated pixels (step **1018**). For example, pixel **908** is located in the saturated region **922** of the first image. This pixel corresponds to pixel **910** in the second image **904**, which lies in the de-saturated region **905** of the second image **904**. The intensities and locations of all pixels in the region **905** are stored in the first storage file along with the transmittance attenuation factor $\mathfrak{R}_2(V)$. The process then loops back to step **1006**. Information stored in the second temporary storage file is replaced by the locations of saturated pixels in the region **924** in the second image **904** (step **1010**). A second and final adjustment of attenuator control voltage is made (step **1011**) followed by the capture of the third image **906** (step **1016**). Since all pixels in the region **924** have become newly de-saturated in the example, the first storage file is updated (step **1018**) to include the intensities and locations of all pixels in this region along with the transmittance attenuation factor $\mathfrak{R}_3(V)$. Since there are no saturated pixels in the third image **906**, the process terminates (steps **1007**) after the process loops back to step **1006**. It will be appreciated that only one attenuation coefficient needs to be stored for each adjustment of the attenuator control voltage, that is, for each new set of de-saturated pixels.

Equation (4) expresses a piece of pseudo code describing this process. In Equation (4), $i$ is the image index, $n$ is the pixel index, $(x_n, y_n)$ are the Cartesian co-ordinates of pixel $n$, $P_i(x_n,y_n)$ is the intensity in image $I_i$ associated with pixel $n$, and $n_{ij}$ is the index associated with the $j$th saturated pixel in image $I_i$.

$$
\begin{aligned}
&for \quad (n = 1; \quad n \leq N; \quad n++)\{ \\
&\quad if \quad (n \notin S_1)\{ \\
&\quad\quad store \quad (x_n, y_n), \quad P_1(x_n, y_n), \quad and \quad 1 \\
&\quad \} \\
&\} \\
&for \quad (i = 1; \quad i \leq (M-1); \quad i++;)\{ \qquad\qquad (4)\\
&\quad for \quad (j = 1; \quad j \leq N_i; \quad j++)\{ \\
&\quad\quad if \quad (n_{ij} \notin S_{i+1})\{ \\
&\quad\quad\quad store \quad (x_{n_{ij}}, y_{n_{ij}}), \quad P_{i+1}(x_{n_{ij}}, y_{n_{ij}}), \quad and \quad \mathfrak{R}_{i+1}(V) \\
&\quad\quad \} \\
&\quad \} \\
&\}
\end{aligned}
$$

Another feature of the present invention is to use a low bit-depth device, such as the digital camera shown in Figures 1, 2 and 3, to generate high dynamic range images (which as discussed to this point are still low bit-depth images), and at the same time, produce recoverable information that may be used to additionally generate high bit-depth images. This feature is premised on the observation that the attenuation coefficient represents additional image information that can be used together with image data (low bit-depth data) to further characterize the bit-depth of the images.

Having the information stored in Equation (4), it is a straightforward process to generate a high bit-depth image using the stored data. Notice that the exemplary data format in the file is for each row to have three elements: pixel position in Cartesian coordinates, pixel intensity and attenuation coefficient. For convenience, denote the intensity data in the file for each row by **P**, the position data by **X**, and attenuation coefficient by $\mathfrak{R}$. Also, denote new intensity data for a reconstructed high bit-depth image by **P**$_{HIGH}$. A simple reconstruction is shown as

$$for \quad (n = 1; \quad n \leq N; \quad n++)\{$$
$$\mathbf{P}_{HIGH}(\mathbf{X}_n) = \mathbf{P}(\mathbf{X}_n) / \mathfrak{R}_n \qquad (5)$$
$$\}$$

where $\mathfrak{R}_n$ is either 1 or $\mathfrak{R}(V)$ as indicated by Equation (4).

The method of producing recoverable information to be used to generate a high bit-depth image described with the preferred embodiment can be modified for other types of high dynamic range techniques such as controlling an integration time of a CCD sensor of a digital camera (see U.S. Patent No. 5,144,442, which is entitled "Wide Dynamic Range Camera" and issued September 1, 1992 in the name of Ran Ginosar et al). In this case, the transmittance attenuation coefficient is a function of time, that is,

**Claims**

1. A method of obtaining an extended dynamic range image of a scene from a plurality of limited dynamic range images captured by an image sensor in a digital camera, said method comprising steps of:

   (a) capturing a plurality of digital images comprising image pixels of the scene by exposing the image sensor to light transmitted from the scene, wherein light transmittance upon the image sensor is adjustable;
   (b) evaluating each image after it is captured for an illumination level exceeding the limited dynamic range of the image for at least some of the image pixels;
   (c) based on the evaluation of each image exceeding the limited dynamic range, adjusting the light transmittance upon the image sensor in order to obtain a subsequent digital image having a different scene brightness range;
   (d) storing the plurality of digital images; and
   (e) processing the stored digital images to generate a composite image having an extended dynamic range greater than any of the digital images by themselves.

2. The method as claimed in claim 1 wherein the step (b) of evaluating each image after it is captured comprises evaluating each image for an illumination level indicative of saturated regions of the image.

3. The method as claimed in claim 1 wherein the step (b) of evaluating each image after it is captured comprises displaying each image after it is captured and evaluating the displayed image for an illumination level indicative of one or more regions of the image exceeding the limited dynamic range of the image.

4. The method as claimed in claim 3 wherein the step (b) of evaluating an image after it is captured uses a manual resource of a human observer.

5. The method as claimed in claim 1 further involving a digital processor and wherein the step (b) of evaluating each image after it is captured comprises using the digital processor to automatically evaluate the image pixels comprising each image for an illumination level indicative of one or more regions of the image exceeding the limited dynamic range of the image

6. The method as claimed in claim 5 wherein the step (b) of automatically evaluating each image after it is captured comprises comparing the image pixels of each image against an intensity threshold indicative of saturation, determining a number of image pixels exceeding the threshold, and evaluating a ratio of the number of pixels exceeding the threshold to the image pixels in the image.

7. The method as claimed in claim 1 wherein the step (c) of adjusting the light transmittance upon the image sensor in order to obtain a subsequent digital image having a different scene brightness range comprises using a liquid crystal variable attenuator to adjust the light transmittance.

8. The method as claimed in claim 1, wherein the plurality of images are subject to unwanted image motion and wherein the step (e) of processing the stored digital images comprises aligning the stored digital images through an image processing algorithm, thereby producing a plurality of aligned images, and generating a composite image from the aligned images.

9. The method as claimed in claim 8 wherein a phase correlation technique is used to align the stored digital images.

10. A system for obtaining an extended dynamic range image of a scene from a plurality of limited dynamic range images of the scene captured by a digital camera, said system comprising:

a camera having (a) an image sensor for capturing a plurality of digital images comprising image pixels of the scene by exposing the image sensor to light transmitted from the scene, wherein light transmittance upon the image sensor is adjustable; (b) means for evaluating each image after it is captured for an illumination level exceeding the limited dynamic range of the image for at least some of the image pixels; (c) a controller for adjusting the light transmittance upon the image sensor in order to obtain a subsequent digital image having a different scene brightness range, whereby said controller is operative based on the evaluation of each image exceeding the limited dynamic range; and (d) a storage device for storing the plurality of digital images; and an offline processor for processing the stored images to generate a composite image having an extended dynamic range greater than any of the digital images by themselves.

11. A method of obtaining a high bit depth image of a scene from images of lower bit depth of the scene captured by an image sensor in a digital camera, said lower bit depth images also comprising lower dynamic range images, said method comprising steps of:

(a) capturing a plurality of digital images of lower bit depth comprising image pixels of the scene by exposing the image sensor to light transmitted from the scene, wherein light transmittance upon the image sensor is variably attenuated for at least one of the images;
(b) evaluating each image after it is captured for an illumination level exceeding the limited dynamic range of the image for at least some of the image pixels;
(c) based on the evaluation of each image exceeding the limited dynamic range, adjusting the light transmittance upon the image sensor in order to obtain a subsequent digital image having a different scene brightness range;
(d) calculating an attenuation coefficient for each of the images corresponding to the degree of attenuation for each image;
(e) storing data for the reconstruction of one or more high bit depth images from the low bit depth images, said data including the plurality of digital images and the attenuation coefficients; and
(f) processing the stored data to generate a composite image having a higher bit depth than any of the digital images by themselves.

*FIG. 1A*

*FIG. 1B*

FIG. 2

FIG. 3

EP 1 418 544 A1

FIG. 4

500 — CAPTURE IMAGE OF SCENE

502 — STORE CAPTURED IMAGE

ADJUST LIGHT ATTENUATION DEGREE — 506

504 — ENOUGH IMAGES CAPTURED ?

NO

YES

508 — ALIGN STORED IMAGES

510 — IMAGE COMPOSITION

OUTPUT

FIG. 5

600 — STORED IMAGES $I_1, I_2, ..., I_N$

602 — TRANSLATIONAL DIFFERENCES $T_{1,2}, T_{2,3}, ..., T_{N-1,N},$

604 — SET $i=1$

610 — INCREMENT $i$

606 — SHIFT $I_{i+1}$ BY $\sum_{k=1}^{i} T_{k,k+1}$

608 — IS $i = N-1$?

NO

YES

612 — ALIGNMENT COMPLETE

FIG. 6

```
┌────────────────────┐
│  TAKE  AN  IMAGE   │─── 702
└────────────────────┘
           │
           ▼
┌────────────────────┐
│  SET  V  =  V_MIN  │─── 704
└────────────────────┘
           │
           ▼                                        708                              722
┌────────────────────┐  706              ┌────────────────────┐        ┌────────┐
│   IS  R > T_N ?    │──────────────────▶│  SAVE  THE  IMAGE  │───────▶│  STOP  │
└────────────────────┘        NO         │  TO STORAGE  320   │        └────────┘
           │ YES                         └────────────────────┘
           ▼                710
┌────────────────────┐
│  SAVE  THE  IMAGE  │
│  TO STORAGE  320   │
└────────────────────┘
           │
           ▼                712
┌────────────────────┐
│   V  =  V + δ_V    │
└────────────────────┘
           │
           ▼                714                720
┌────────────────────┐              ┌────────┐
│  IS  V < V_MAX ?   │─────────────▶│  STOP  │
└────────────────────┘     NO       └────────┘
           │ YES
           ▼                716
┌────────────────────────┐
│      SEND  V  TO        │
│  ATTENUATOR  GATE  328  │
└────────────────────────┘
           │
           ▼                718
┌────────────────────┐
│   TAKE  AN  IMAGE  │
└────────────────────┘
```

*FIG. 7*

_804_

_320_

_802_

_809_

STORAGE

IMAGE
PROCESSOR

OUTPUT
DEVICE

_807_

COMPUTER
READABLE
STORAGE
MEDIUM

_806_

_808_

*FIG. 8*

*FIG. 9*

FIG. 10

HISTOGRAM

*1116*

*1114*

INTENSITY
LEVEL

*1112* 0 1023

*FIG. 11A*

HISTOGRAM

*1136*

*1134*

INTENSITY
LEVEL

*1138* 0 255 1023

*FIG. 11B*

HISTOGRAM

*1156*

*1158*

INTENSITY
LEVEL

*1152* 0 255 1023

*FIG. 11C*

## EUROPEAN SEARCH REPORT

**European Patent Office**

Application Number

EP 03 07 7029

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y<br>A | GB 2 331 426 A (LOCKHEED MARTIN TACTICAL DEFEN) 19 May 1999 (1999-05-19)<br>* abstract *<br>* page 2, line 12 - line 25 *<br>* page 3, line 6 - line 14 *<br>* page 4, line 18 - line 23 *<br>* page 5, line 22 - line 24 *<br>* page 8, line 12 - line 18 *<br>--- | 1,2,5,6,<br>10,11<br>2,3,7-9 | G06T5/50 |
| Y<br>A | US 5 194 960 A (OTA YOSHITAKA) 16 March 1993 (1993-03-16)<br>* abstract *<br>* column 1, line 6 - line 8 *<br>* column 4, line 23 - line 55 *<br>* column 5, line 27 - line 45 *<br>--- | 1,2,5,6,<br>10,11<br>2,3,7-9 | |
| A | PATENT ABSTRACTS OF JAPAN<br>vol. 2003, no. 09,<br>3 September 2003 (2003-09-03)<br>& JP 2003 134354 A (NORITSU KOKI CO LTD),<br>9 May 2003 (2003-05-09)<br>* abstract *<br>--- | 5,6 | |
| A | MANN S ET AL: "ON BEING 'UNDIGITAL' WITH DIGITAL CAMERAS: EXTENDING DYNAMIC RANGE BY COMBINING DIFFERENTLY EXPOSED PICTURES"<br>FINAL PROGRAM AND ADVANCE PRINTING OF PAPERS. ANNUAL CONFERENCE. IMAGING ON THE INFORMATION SUPERHIGHWAY, XX, XX,<br>May 1995 (1995-05), pages 442-448,<br>XP000933963<br>* abstract *<br>* page 445, paragraphs DYNAMIC,RANGE,DYNAMIC,DOMAIN *<br>----- | 1-11 | |

**TECHNICAL FIELDS SEARCHED (Int.Cl.7)**

G06T

The present search report has been drawn up for all claims

| Place of search | Date of completion of the search | Examiner |
|---|---|---|
| THE HAGUE | 4 February 2004 | Gonzalez Ordonez, 0 |

EPO FORM 1503 03.82 (P04C01)

## ANNEX TO THE EUROPEAN SEARCH REPORT
## ON EUROPEAN PATENT APPLICATION NO.

EP 03 07 7029

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2004

| Patent document cited in search report | | Publication date | Patent family member(s) | | Publication date |
|---|---|---|---|---|---|
| GB 2331426 | A | 19-05-1999 | US | 6501504 B1 | 31-12-2002 |
| US 5194960 | A | 16-03-1993 | JP | 3254581 A | 13-11-1991 |
| | | | JP | 2823926 B2 | 11-11-1998 |
| | | | JP | 3254582 A | 13-11-1991 |
| | | | JP | 2823927 B2 | 11-11-1998 |
| | | | JP | 3254584 A | 13-11-1991 |
| | | | DE | 4106825 A1 | 12-09-1991 |
| | | | GB | 2243261 A ,B | 23-10-1991 |
| JP 2003134354 | A | 09-05-2003 | NONE | | |

EPO FORM P0459

For more details about this annex : see Official Journal of the European Patent Office, No. 12/82